Europäisches Patentamt

European Patent Office

Office européen des brevets

(11) Publication number: **0 305 609 B1**

## EUROPEAN PATENT SPECIFICATION

(45) Date of publication of patent specification: **20.05.92** (51) Int. Cl.⁵: **G01F 1/58**

(21) Application number: **87306930.6**

(22) Date of filing: **05.08.87**

---

(54) **Averaging velocity sensor for measuring fluid flow in a conduit.**

---

(43) Date of publication of application:
**08.03.89 Bulletin 89/10**

(45) Publication of the grant of the patent:
**20.05.92 Bulletin 92/21**

(84) Designated Contracting States:
**BE DE FR GB SE**

(56) References cited:
**DE-A- 1 914 335**
**DE-A- 3 319 807**
**FR-A- 2 448 709**
**GB-A- 1 253 967**
**US-E- 28 989**

(73) Proprietor: **MARSH -McBIRNEY INC.**
**8595 Grovemont Circle**
**Gaithersburg Maryland 20877(US)**

(72) Inventor: **Marsh, Lawrence B,**
**12842 Littleton Street**
**Silver Spring MD 20902(US)**

(74) Representative: **Crawford, Andrew Birkby et al**
**A.A. THORNTON & CO. Northumberland**
**House 303-306 High Holborn**
**London WC1V 7LE(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

### BACKGROUND OF THE INVENTION

The measurement of fluid flow in a full conduit is necessary for modern automation of manufacturing plants, as well as for precisely measuring the quantity of flow passing a point such as in the custody transfer of process liquids. The present invention relates to an improved sensor for measuring the average velocity of fluid flow in a conduit by simultaneously sensing the velocity of flow at a number of locations within the conduit and averaging the sensed velocities so that a true flow rate can be determined even though the flow profiles may vary.

### BRIEF DESCRIPTION OF THE PRIOR ART

Electromagnetic flowmeters are well-known in the patented prior art as evidenced by the U.S. patents to Olson No. 3,693,440, Cushing No. 4,089,218 and Marsh No. 4,459,858. The Olson patent, for example, discloses a flowmeter having a spool-type configuration in which a uniform magnetic field is generated in the fluid by a pair of coils lying in a plane on an open cage support. A pair of spaced electrodes are arranged on the support in a plane parallel to the plane containing the coils for measuring the potential gradient in the fluid medium moving through the magnetic field.

The Cushing and Marsh patents each disclose probe type sensors. The Cushing patent, for example, teaches a velocity sensor including a transducer body having two pairs of electrodes extending from the surface of the housing. The pairs of electrodes are arranged 90° around the transducer axis with respect to each other and are staggered by an offset distance along the axis of the transducer. Finally, the Marsh patent, which is assigned to the assignee of the present invention, discloses a point velocity sensor including a probe portion which protrudes into a conduit. The probe includes an electromagnet for generating an electromagentic field in the fluid and a plurality of electrodes for producing electrical signals in response to the flow of fluid through the field. The signals are converted into a flow velocity output signal by a processing device.

Conventional spool type flowmeters have one pair of electrodes and a magnetic field that is uniform and perpendicular to the flowing fluid and the electrodes. These instruments provide a reasonable integration of the flow passing by the sensor, but are sensitive to flow profiles that are asymmetrical resulting from obstructions in the flow path such as valves, bends, and the like. Thus for spool type meters, calibration depends upon the similarity of the flow profile in the field being similar to that experience during calibration at the factory. This usually means that the instruments must be placed downstream a distance of between fifteen to thirty times the diameter of the conduit to insure that the flow profiles are uniform and symmetrical.

Conventional probe type flowmeters are essentially point velocity sensors which measure local flow velocity at or near the tip of the sensor. With such an instrument, one can profile the fluid flow, determine its fluid characteristics, and then calculate the flow. The instrument can thus be calibrated on site. Such an instrument can be used in both clean and dirty fluids. However, when used in dirty fluids, the sensor must be placed at a location near the conduit wall to minimize or eliminate the collection of debris. Shifts in flow profile due to changing flow rates or obstructions in the flow path cause shifts in calibration because the relationship between the sensed velocity and the mean flow velocity will have changed.

One typical conventional electromagnetic flowmeter is disclosed in GB-A-1253967. This flowmeter consists of a streamlined support body which houses a magnetizing winding arranged to be energised to produce an alternating magnetic flux. Two pairs of electrodes are used to measure the voltage induced by the flow of liquid in the magnetic field, two pairs being used to eliminate the effect of any circulation of liquid around the body. This arrangement suffers from the limitations mentioned above when the flow profile is asymmetrical.

FR-A-2448709 discloses a flowmeter comprising a drag body constructed with the aim of inducing vortexes in the liquid flow. The resulting emf is measured by groups of electrodes arranged around the drag body.

The present invention was developed in order to overcome these and other drawbacks of the prior devices by providing an improved averaging velocity sensor which accurately reflects changes in flow profile by sensing flow velocity at plurality of locations across the cross-sectional area of the conduit within which the fluid flows.

A first aspect of the present invention provides an apparatus for measuring the average velocity of fluid flow in a conduit, comprising

(a) generally tubular housing means extending across the interior of the conduit;

(b) magnet means arranged within said housing means for generating in the fluid a magnetic field the axis of which extends normal to the direction of fluid flow;

(c) electrode means including a plurality of electrodes or electrode areas arranged in spaced relation along the length of and adjacent the outer surface of said housing means, said electrodes or electrode areas being further arranged in diametrically opposed pairs relative to said housing means, the lines passing through the pairs being arranged perpendicular to the direction of fluid flow, said electrodes or electrode areas producing electrical signals in response to the flow of fluid through said magnetic field, each of said signals being a function of the velocity of fluid flow adjacent each of said electrodes or electrode areas, respectively, whereby a plurality of discrete fluid flow velocity signals are generated simultaneously at a plurality of locations across the area of the conduit; characterised in that said pairs of electrodes or electrode areas are arranged in respective concentric annular segments within the interior of the conduit, the cross-sectional area of each of said annular segments being equal, said pairs of electrodes or electrode areas being unequally spaced along said housing means.

The electrodes produce electrical signals in response to the flow of fluid through the magnetic field, each of the signals being a function of the velocity of fluid flow adjacent each electrode. In this manner, a plurality of discrete flow velocity signals are generated simultaneously at a plurality of locations across the area of the conduit. The electrical signals may be delivered to an amplifier where they are combined to produce an average flow velocity output signal.

In accordance with one embodiment of the invention, the conduit has a circular cross-sectional configuration and the housing is arranged along the conduit diameter.

In accordance with another embodiment of the invention, the electrodes are formed from a pair of parallel rods arranged adjacent the inner surface of the housing and extending parallel to the housing axis. The housing contains a plurality of openings adjacent the rods, whereby the portion of each rod adjacent each opening produces the electrical signal in response to the flow velocity adjacent thereto.

A second aspect of the invention provides apparatus for measuring the average velocity of fluid flow in a conduit as defined in the preamble of claim 8, characterised in that said magnet means comprises an electromagnet; and said apparatus further comprises amplifier means comprising a plurality of gain-modified amplifiers ($G_1$-$G_9$) corresponding in number to the number of electrode pairs, one electrode or electrode area of each pair being connected with one input of said corresponding amplifier and the other of each pair being connected with the other input of said corresponding amplifier, the gain of each amplifier being adjusted in accordance with the cross-sectional annular area of the conduit ($A_1$-$A_5$) corresponding

with the location of said corresponding pair of electrodes or electrode areas; the outputs of said amplifiers being connected to adding means connected with the outputs of said amplifiers for producing a mean flow velocity signal.

A third aspect of the invention provides apparatus for measuring the average velocity of fluid flow in a conduit as defined in the preamble of claim 9 characterised in that said magnet means comprises an electromagnet; said apparatus further comprises amplifier means connected to said electrode means for producing a mean flow velocity signal; and the strength of said magnetic field varies from a maximum at the ends of said housing means to a minimum at the middle of said housing means, said magnetic field strength corresponding with the cross-sectional annular areas of the conduit corresponding with the location of said pairs of electrodes.

According to another embodiment of the invention, the rods are removably and rotatably connected with the housing. In this manner, the rods may be rotated relative to the housing to expose clean unused portions of the rods to the openings in the housing. After the electrode rods have become worn through continued use, the used rods may be replaced with clean rods.

In accordance with another embodiment of the invention, the housing is mounted on a generally cylindrical spool member having an inner diameter corresponding with the inner diameter of the conduit. The spool member is arranged between and affords fluid flow between segments of the conduit.

According to other embodiments of the invention, the housing mounted in the spool member has I, H, Y, or cross-shaped configurations.

BRIEF DESCRIPTION OF THE FIGURES

Other objects and advantages of the invention will become apparent from a study of the following specification when viewed in the light of the accompanying drawing, in which:

Fig. 1 is a partial sectional view illustrating the averaging velocity sensor according to the invention mounted in a conduit;

Fig. 2 is a cross-sectional view of a cylindrical conduit illustrating the interior thereof divided into annular segments of equal area;

Figs. 3a and 3b are perspective and sectional views, respectively, of a preferred configuration of the sensor.

Figs. 4a and 4b are sectional views of an second embodiment of the sensor electrodes;

Figs. 5a and 5b are sectional views of a sensor having a tapered housing;

Fig. 6 is a perspective view of a third embodiment of the sensor housing and electrodes;

Figs. 7-9 are schematic representations of various amplifier configurations for combining the electrical signals generated by the sensor electrodes to produce an average flow velocity output signal;

Fig. 10 is a graphical representation of the variable magnetic field strength generated by the sensor of Fig. 9; and

Figs. 11a-11f illustrate various sensor housing configurations mounted on a spool according to an alternate embodiment of the invention.

## DETAILED DESCRIPTION

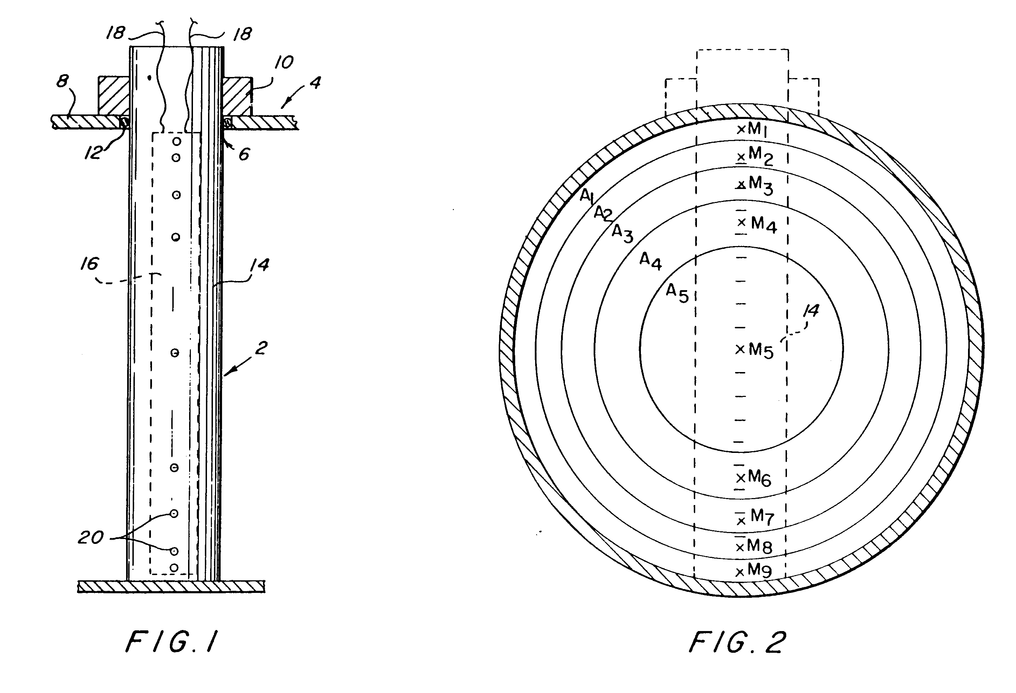

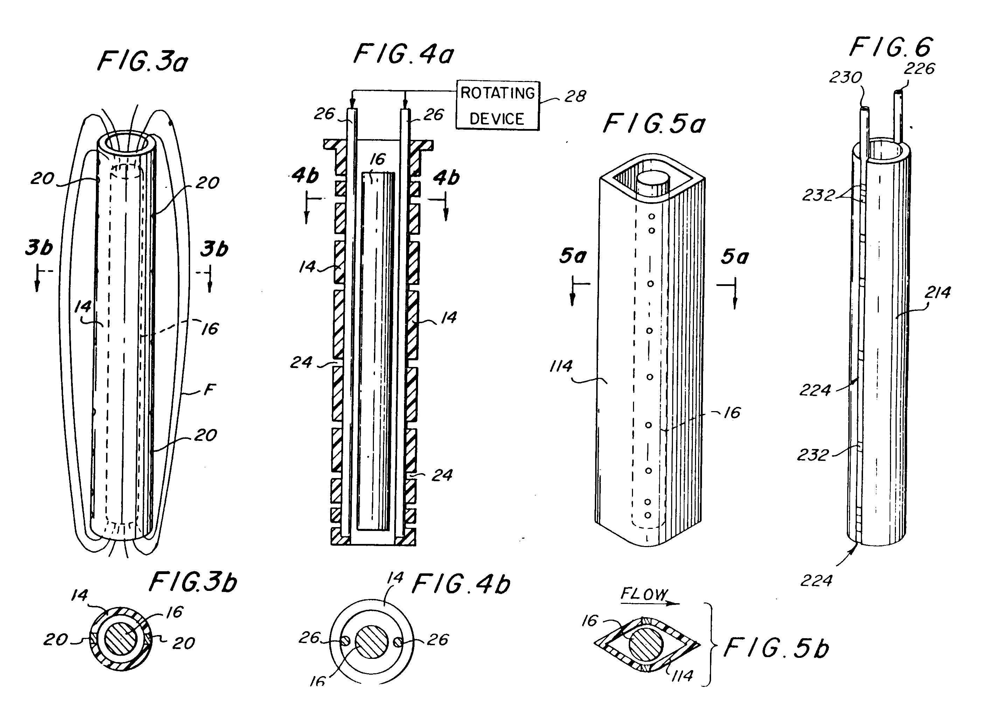

As shown in Figs. 1 and 3, the present invention relates to a sensing device 2 used for measuring the average velocity of fluid flow in a cylindrical conduit 4.

In a preferred embodiment, the sensing device is of the probe type which passes through an opening 6 cut or drilled in the conduit wall 8. A valve member 10 including a seal 12 permanently mounts the sensing device 2 within the interior of the conduit.

The sensing device includes a tubular housing 14 which is preferably formed of a synthetic plastic material. The housing preferably extends along the diameter of the conduit completely across the interior thereof as shown in Fig. 1. The housing is configured so as to minimize the impedance to fluid flow in the conduit. As shown in Figs. 3b and 4b, the housing may be cylindrical having a circular cross-sectional configuration. Alternatively, as shown in Figs. 5a and 5b, the housing 114 may have a tapered, streamlined configuration in the direction of fluid flow.

A magnet, and preferably an electromagnet 16, 116 is arranged with the housing 14 as shown in Figs. 1, 3a, 4a, 5a and 9. A pair of wires 18 connect the coil (not shown) of the electromagnet with an external current source (not shown) in a conventional manner. The electromagnetic field F generated in the fluid by the internal electromagnet 16 has an axis which extends normal to direction of fluid flow.

A plurality of electrodes such as "button" electrodes 20 are arranged adjacent or embedded in the outer surface of the housing 14. As shown in the drawing, the electrodes are arranged in spaced relation along lines extending parallel to the housing axis and along the length thereof. As shown more particularly in Figs. 3a and 3b, the electrodes are arranged in diametrically opposed pairs relative to the housing 14, with the lines passing through the opposed pairs being arranged perpendicular to the direction of flow. As fluid flows through the electromagnetic field, each electrode produces an electrical signal as a function of the velocity of fluid flow adjacent thereto. Thus, a plurality of discrete fluid flow velocity signals are generated simultaneously at a plurality of locations across the area of the conduit.

In a preferred arrangement, the spacing between adjacent electrode pairs varies as a function of the number of electrode pairs provided on the housing. The cross sectional area of the conduit is divided into a number N of concentric annular segments of equal size according to the equation

$$N = (X + 1) \div 2$$

where X equals the number of electrode pairs. Thus, for example, where nine electrode pairs are provided as shown in the drawing, five segments $A_1$ - $A_5$ of equal area are defined in the cross-sectional area of the conduit as shown in Fig. 2. The electrode pairs are spaced along the length of the housing 14 so that the center electrode $M_5$ is centrally arranged in the centre of segment $A_5$ and the electrodes to either side of the center electrode are centrally arranged in the concentric segments $A_4$, $A_3$, $A_2$, and $A_1$, respectively. Thus for a conduit having a known diameter, the length of the housing and the distribution of the desired number of electrode pairs along the length thereof can be predetermined, whereby each sensing device can be preconfigured for the conduit of known diameter. The distribution of electrodes along the length of the housing in this fashion as shown in Figs. 1, 2, 3a, 4a, and 5a provides an accurate indication of flow profile across the entire area of the conduit and is thus sensitive to changes in flow profiles to provide an accurate flow output signal.

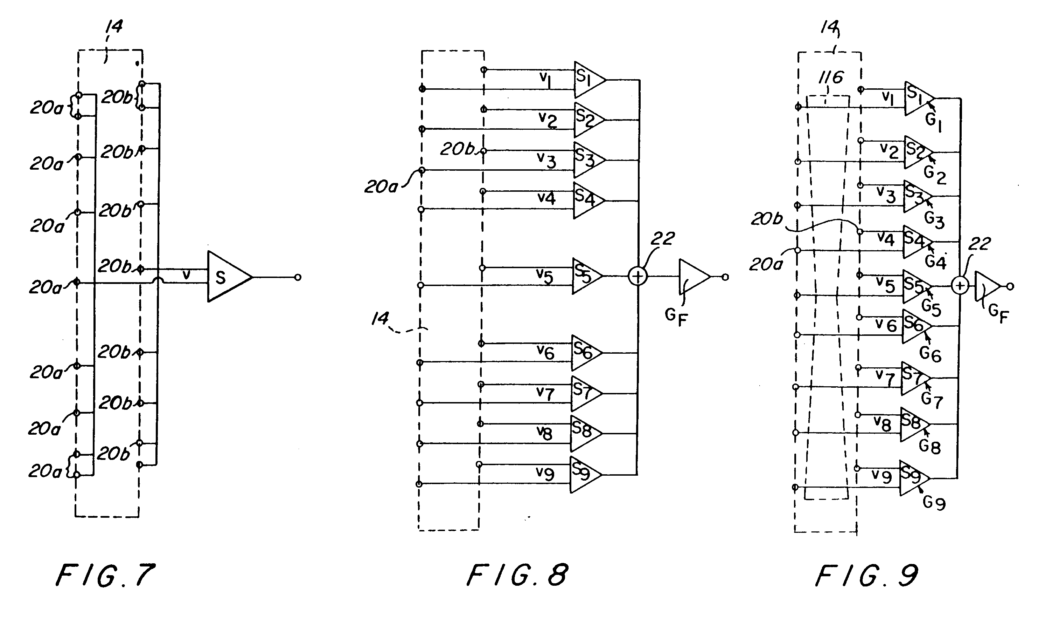

Referring now to Fig. 7 one design for processing the discrete fluid flow signals generated by the individual electrodes is shown. One electrode 20a of each pair of electrodes has its output connected in series with the other one electrode 20a of each pair on the same side of the housing 14 to combine the electrical signals therefrom. The combined signals are delivered to one input of an amplifier S. The other electrodes 20b of each pair on the opposite side of the housing 14 also have their outputs connected in series for delivery of the combined signals therefrom to the other input of the amplifier S. The amplifier combines and compares the voltage V from the discrete electrical signals to provide an output signal corresponding with the average flow velocity within the conduit since the electrode pairs measure the local velocity for equal annular areas.

In the alternate arrangement of Fig. 8, separate amplifiers $S_1$ - $S_9$ are provided for each electrode pair. One electrode of each pair delivers its electrical signal to one input of the corresponding amplifier and the other electrode of each pair delivers its electrical signal to the other input of the corresponding amplifier. The amplifiers compare the voltages of the input electrical signals and deliver an output signal to an adder 22 which produces the mean flow velocity output signal. This signal is delivered to a scaling amplifier $G_F$ which is scaled to the area of the conduit. The output from the amplifier $G_F$ corresponds to volumetric flow rate.

In the alternate embodiment of Fig. 9, the electrode pairs are evenly spaced along the length of the housing 14, whereby the areas of the annular segments which contain the electrode pairs are unequal. Using this configuration, the gain $G_1$ - $G_9$ of each amplifier $S_1$ - $S_9$ is adjusted to compensate for the different areas being measured.

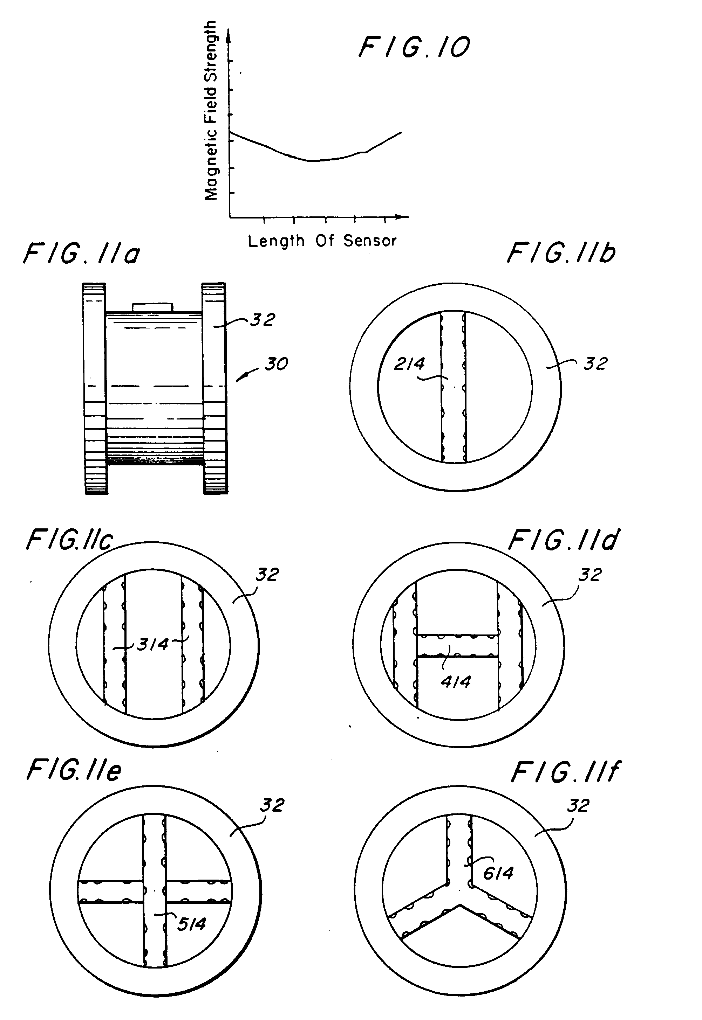

In a further alternative embodiment having equally spaced electrode pairs, the electromagnet 116 may be tapered as shown in phantom in Fig. 9 to produce an electromagnetic field whose strength is greater at the ends of the housing and lesser at the middle of the housing as shown in Fig. 10, such that voltages generated by the electrodes are proportional to annulus areas. Using a tapered electromagnet eliminates the need for gain adjustment of the amplifiers, whereby the amplifier configurations of Figs. 7 and 8 may be used.

Referring now to Fig. 4a, an alternate electrode arrangement is shown. The housing 14 of the sensor contains a plurality of pairs of openings 24 in desired locations either equally spaced as discussed with regard to the electrode arrangement shown in Fig. 9 or spaced so that the openings are centrally arranged in the annular areas of equal size as discussed with regard to the electrode arrangements shown in Figs. 1, 2, 3a, 5a, 7, and 8. In lieu of separate button electrodes, a pair of electrode rods 26 formed of a conductive material are arranged within the housing on opposite sides thereof. As shown in Fig. 4a, the rods extend parallel to the housing axis and are arranged adjacent the openings of each pair of openings, respectively. The portion of each rod adjacent an opening functions as the equivalent to the button electrodes as discussed above. It will be appreciated that each rod thus accumulates the electrical signals generated by the "series connected" portions thereof adjacent the openings on each side of the housing. The outputs of each rod are connected with the separate inputs of an amplifier similar to the configuration shown in Fig. 7 to produce an average flow velocity output signal.

The rods 26 are preferably rotatably and removably connected with the housing such as for example by bearings (not shown). The rods may protrude from the conduit for connection with a rotating device 28 which may either continuously or intermittently rotate the rods about their axes, respectively. Alternatively, the rods may be rotated by hand. Rotation of the rods is particularly beneficial to insure that the clean portion of the rod faces each opening. When used in dirty fluids, the electrodes have a tendency to become worn during use. With the design of Fig. 4a, the worn portions of the rod may be rotated away from the openings, thereby exposing a clean rod portion without interrupting the flow measurements being made. When the rods have become completely contaminated, they may easily be removed and cleaned or replaced with clean rods. Thus the only down time of the device is that during which the rods are being removed for cleaning or replacement.

An alternate embodiment using rods for the electrodes is shown in Fig. 6. In this embodiment, the housing 214 contains a pair of opposed vertical slots 224 in lieu of the openings 24 provided in the housing of the embodiment shown in Fig. 4a. The slots are configured with an outer diameter slightly greater than the rods 226, whereby each rod may be arranged within a corresponding slot. The rods 226 are covered with a layer of insulation 230, but for selected portions 232 of the rods which are exposed directly to the fluid flow. The exposed portions of the rods may either be equally spaced as discussed with regard to the electrode arrangement shown in Fig. 9 or spaced so that the openings are centrally arranged in the annular areas of equal size as discussed with regard to the electrode arrangements shown in Figs. 1, 2, 3a, 5a, 7, and 8. The exposed portions 232 of the electrode rods 226 thus function in the same manner as the button electrodes as discussed above. As in the embodiment shown in Fig. 4a, an electromagnet (not shown) is provided within the housing 214 and the rods 226 are rotatably and removably connected with the housing.

The sensor according to the invention may also be used as a spool-type device as shown in Figs. 11a-11e. The spool 30 comprises a cylindrical support 32 which is used to join two segments of a cylindrical conduit, the support having an inner diameter corresponding with the inner diameter of the conduit. Fluid communication is thus afforded between the conduits via the spool member 30.

The sensor housing 14 is connected with the support. As in the probe type device, the sensor housing contains an electromagnet and includes a plurality of electrode pairs in any of the configurations set forth above. The housing 214 preferably is arranged along the diameter of the support 32 as shown in Fig. 11b. Alternatively, a pair of identical housings 314 may be arranged on chords extending across the interior of the cylindrical support 32 as shown in Fig. 11c. The housing 414, 514, 614 may also have H, cross, and Y shaped configurations as shown in Figs. 11d, 11e, and 11f, respectively.

It will be appreciated by those skilled in the art that the present invention may also be used in "electrodeless" type electromagnetic or dielectric flowmeters wherein the electrodes are electrically shielded or insulated from the media whose flow is being determined. The use of an electrically driven shield for the electrodes eliminates the effects of capacitance on the electrodes and enables the detection of signals through an insulating wall.

**Claims**

1. Apparatus for measuring the average velocity of fluid flow in a conduit (4), comprising
   (a) generally tubular housing means (14) extending across the interior of the conduit;
   (b) magnet means (16) arranged within said housing means (14) for generating in the fluid a magnetic field the axis of which extends normal to the direction of fluid flow;
   (c) electrode means including a plurality of electrodes (20) or electrode areas (24; 232) arranged in spaced relation along the length of and adjacent the outer surface of said housing means, said electrodes or electrode areas (24; 232) being further arranged in diametrically opposed pairs relative to said housing means (14), the lines passing through the pairs being arranged perpendicular to the direction of fluid flow, said electrodes or electrode areas (24; 232) producing electrical signals in response to the flow of fluid through said magnetic field, each of said signals being a function of the velocity of fluid flow adjacent each of said electrodes or electrode areas, respectively, whereby a plurality of discrete fluid flow velocity signals are generated simultaneously at a plurality of locations across the area of the conduit (4);
   characterised in that said pairs of electrodes (20) or electrode areas are arranged in respective concentric annular segments within the interior of the conduit, the cross-sectional area of each of said annular segments being equal, said pairs of electrodes (20) or electrode areas being unequally spaced along said housing means (14).

2. Apparatus as defined in claim 1, and further comprising
   (d) processing means connected with said electrode means for combining said electrical signals to produce an average flow velocity output signal.

3. Apparatus as defined in claim 2, wherein said magnet means (16) comprises an electromagnet.

4. Apparatus as defined in claim 3, wherein said processing means comprises amplifier means having first and second inputs.

5. Apparatus as defined in claim 4, wherein said amplifier means comprises a plurality of amplifiers ($S_1$-$S_9$) corresponding in number with the number of electrode means pairs, one electrode (20) or electrode area (24; 232) of each pair being connected with one input of said corresponding amplifier and the other of each pair being connected with the other input of said corresponding amplifier.

6. Apparatus as defined in claim 7 and further comprising adding means (22) connected with the outputs of said amplifiers for producing a mean flow velocity signal.

7. Apparatus as defined in claim 4, wherein each of said pairs of electrodes include first and second electrodes or electrode areas, said first electrodes or electrode areas being arranged on one side of said housing means and being connected in series with said amplifier means first input and said second electrodes or electrode areas being arranged on the opposite side of said housing means and being connected in series with said amplifier means second input.

8. Apparatus for measuring the average velocity of fluid flow in a conduit (4), comprising
   (a) generally tubular housing means (14) extending across the interior of the conduit;
   (b) magnet means (16) arranged within said housing means (14) for generating in the fluid a magnetic field the axis of which extends normal to the direction of fluid flow;
   (c) electrode means including a plurality of electrodes (20) or electrode areas (24; 232) arranged in spaced relation along the length of and adjacent the outer surface of said housing means, said electrodes or electrode areas (24; 232) being further arranged in diametrically opposed pairs relative to said housing means (14), the lines passing through the pairs being arranged perpendicular to the direction of fluid flow, said electrodes or electrode areas (24; 232) producing electrical signals in response to the flow of fluid through said magnetic field, each of said signals being a function of the velocity of fluid flow adjacent each of said electrodes or electrode areas, respectively, whereby a plurality of discrete fluid flow velocity signals are generated simultaneously at a plurality of locations across the area of the conduit (4); the conduit (4) having a generally circular cross section, and the electrodes being equally spaced along the length of the housing means; characterised in that said magnet means comprises an electromagnet; and said apparatus further comprises amplifier means comprising a plurality of gain-modified amplifiers ($G_1$-$G_9$) corresponding in number to the number of electrode pairs, one electrode or electrode area of each pair being connected with one input of said corresponding amplifier and the other of each pair being connected with the other input of said corresponding amplifier, the gain of each amplifier being adjusted in accordance with the cross-sectional annular area of the conduit ($A_1$-$A_5$) corresponding with the location of said corresponding pair of electrodes or electrode areas; the outputs of said amplifiers being connected to adding means (22) connected with the outputs of said amplifiers for producing a mean flow velocity signal.

9. Apparatus for measuring the average velocity of fluid flow in a conduit (4), comprising

(a) generally tubular housing means (14) extending across the interior of the conduit;

(b) magnet means (16) arranged within said housing means (14) for generating in the fluid a magnetic field the axis of which extends normal to the direction of fluid flow;

(c) electrode means including a plurality of electrodes (20) or electrode areas (24; 232) arranged in spaced relation along the length of and adjacent the outer surface of said housing means, said electrodes or electrode areas (24; 232) being further arranged in diametrically opposed pairs relative to said housing means (14), the lines passing through the pairs being arranged perpendicular to the direction of fluid flow, said electrodes or electrode areas (24; 232) producing electrical signals in response to the flow of fluid through said magnetic field, each of said signals being a function of the velocity of fluid flow adjacent each of said electrodes or electrode areas, respectively, whereby a plurality of discrete fluid flow velocity signals are generated simultaneously at a plurality of locations across the area of the conduit (4); the conduit (4) having a generally circular cross-section; and the electrodes being equally spaced along the diameter of the housing means;

characterised in that said magnet means comprises an electromagnet; said apparatus further comprises amplifier means connected to said electrode means for producing a mean flow velocity signal; and the strength of said magnetic field varies from a maximum at the ends of said housing means to a minimum at the middle of said housing means, said magnetic field strength corresponding with the cross-sectional annular areas of the conduit corresponding with the location of said pairs of electrodes.

10. Apparatus as claimed in claim 9, wherein each of said pairs of electrodes include first and second electrodes (20a,20b) or electrode areas, said first electrodes (20a) or electrode areas being arranged on one side of the housing means (14) and being connected in series with an amplifier first input and said second electrodes (20b) or electrode areas being arranged on the opposite side of the housing means and being connected with the amplifier second input.

11. Apparatus as defined in claim 9, wherein said amplifier means comprises a plurality of amplifiers ($S_1$-$S_9$) corresponding in number with the number of electrode means pairs, one electrode or electrode area of each pair being connected with one input of said corresponding amplifier and the other of each pair being connected with the other input of said corresponding amplifier, and further comprising adding means (22) connected with the outputs of said amplifiers for producing said mean flow velocity signal.

12. Apparatus as defined in any preceding claim, wherein said electrode means comprises a pair of parallel rods (26) arranged adjacent the inner surface of said housing means (14) and extending parallel to the axis of said housing means, said housing means containing a plurality of openings (24) adjacent said rods, whereby the portions of said rods (26) adjacent said openings (24) define said electrode areas.

13. Apparatus as defined in claim 12, wherein said rods (26) are removably connected with said housing means, whereby said rods may be cleaned or replaced after they become dirty or contaminated through use.

14. Apparatus as defined in claim 13, wherein said rods (26) are rotatably connected with said housing means, whereby a clean, unused portion of said rods may be arranged adjacent said housing openings upon rotation of said rods.

15. Apparatus as defined in any of claims 1 to 11, wherein said housing means contains a pair of vertical through-slots in the outer surface thereof, and further wherein said electrodes comprise a pair of insulated electrode rods (230,226) arranged in said slots, respectively, selected portions of said rods being free of insulation for exposure to the fluid flow, whereby said selected portions (232) of said rods define said electrode areas.

16. Apparatus as defined in claim 15, wherein said rods are removably and rotatably connected with said housing means (14).

17. Apparatus as defined in claim 14 or 16, and further comprising rotating means (28) connected with said rods for rotating said rods relative to said housing means.

18. Apparatus as defined in any preceding claim, wherein the conduit has a circular cross-sectional configuration and further wherein said housing means is arranged along the diameter of the conduit.

19. Apparatus as defined in any preceding claim, wherein said housing means (114) has a streamlined configuration in the direction of fluid flow.

20. Apparatus as defined in any preceding claim, and further comprising mounting valve means (10) for mounting said housing means through an opening in the wall of the conduit.

21. Apparatus as defined in any of claims 1 to 19, wherein the conduit has a circular cross-sectional configuration, and further comprising a generally cylindrical spool member (30) having an inner diameter corresponding with the inner diameter of the conduit, said spool member being arranged between and affording fluid flow between segments of the conduit, said housing means being connected with said spool member.

22. Apparatus as defined in claim 21, wherein said housing means is arranged along the diameter of said spool member (30).

23. Apparatus as defined in claim 21, wherein said housing means (414) has an H-shaped configuration.

24. Apparatus as defined in claim 21, wherein said housing means (614) has a Y-shaped configuration.

25. Apparatus as defined in claim 21, wherein said housing means (514) has a cross-shaped configuration.

26. Apparatus as defined in claim 21, wherein said housing means includes a pair of housings (314) arranged along parallel chords of said spool member.

27. Apparatus as defined in any of claims 2 to 26, further comprising a scaling amplifier scaled to the area of the conduit for converting the mean flow velocity signal to a volumetric flow rate signal.

**Revendications**

1. Appareil de mesure de la vitesse moyenne d'un courant de fluide dans un conduit (4), comprenant :

   (a) un dispositif (14) à boîtier de forme générale tubulaire, disposé transversalement à l'intérieur du conduit,
   (b) un dispositif à aimant (16) placé dans le boîtier (14) et destiné à créer, dans le fluide, un champ magnétique dont l'axe est perpendiculaire à la direction d'écoulement du fluide, et
   (c) des électrodes comprenant plusieurs électrodes (20) ou zones d'électrode (24 ; 232) espacées le long de la surface externe du boîtier et près de celle-ci, les électrodes ou zones d'électrode (24 ; 232) étant en outre disposées en paires diamétralement opposées par rapport au boîtier (14), les lignes passant par les paires étant perpendiculaires à la direction d'écoulement du fluide, les électrodes ou zones d'électrode (24 ; 232) créant des signaux électriques lors de l'écoulement du fluide dans le champ magnétique, chacun des signaux étant fonction de la vitesse du courant de fluide près de chacune des électrodes ou zones d'électrode respectivement, si bien que plusieurs signaux discrets de vitesse du courant de fluide sont créés simultanément à plusieurs emplacements dans la section du conduit (4),
   caractérisé en ce que les paires d'électrodes (20) ou de zones d'électrode sont disposées dans des segments annulaires concentriques respectifs formés à l'intérieur du conduit, les sections des différents segments annulaires étant égales, les paires d'électrodes (20) ou de zones d'électrode étant irrégulièrement espacées le long du boîtier (14).

2. Appareil selon la revendication 1, caractérisé en ce qu'il comporte en outre :

(d) un dispositif de traitement connecté aux électrodes et destiné à combiner les signaux des électrodes pour la formation d'un signal de sortie de vitesse moyenne du courant.

3. Appareil selon la revendication 2, dans lequel le dispositif à aimant (16) est un électro-aimant.

4. Appareil selon la revendication 3, dans lequel le dispositif de traitement comprend un dispositif amplificateur ayant des premières et secondes entrées.

5. Appareil selon la revendication 4, dans lequel le dispositif amplificateur comporte plusieurs amplificateurs ($S_1$ à $S_9$) dont le nombre correspond au nombre de paires d'électrodes, une électrode (20) ou zone d'électrode (24 ; 232) de chaque paire étant connectée à une entrée de l'amplificateur correspondant et l'autre électrode de chaque paire étant connectée à l'autre entrée de l'amplificateur correspondant.

6. Appareil selon la revendication 7, comprenant en outre un dispositif additionneur (22) connecté aux sorties des amplificateurs et destiné à créer un signal de vitesse moyenne du courant.

7. Appareil selon la revendication 4, dans lequel chacune des paires d'électrodes comprend une première et une seconde électrode ou zone d'électrode, les premières électrodes ou zones d'électrode étant placées d'un premier côté du boîtier et étant connectées en série avec la première entrée du dispositif amplificateur et les secondes électrodes ou zones d'électrode étant placées de l'autre côté du boîtier et étant connectées en série avec la seconde entrée du dispositif amplificateur.

8. Appareil de mesure de la vitesse moyenne d'un courant de fluide dans un conduit (4), comprenant :

(a) un boîtier (14) de forme générale tubulaire disposé transversalement à l'intérieur du conduit,

(b) un dispositif à aimant (16) placé à l'intérieur du boîtier (14) et destiné à créer, dans le fluide, un champ magnétique dont l'axe est perpendiculaire à la direction d'écoulement du fluide, et

(c) un dispositif à électrodes comprenant plusieurs électrodes (20) ou zones d'électrode (24 ; 232) placées à distance le long de la surface externe du boîtier et près de cette surface, les électrodes ou zones d'électrode (24 ; 232) étant en outre disposées en paires diamétralement opposées par rapport au boîtier (14), les droites passant par les paires étant perpendiculaires à la direction d'écoulement du fluide, les électrodes ou zones d'électrode (24 ; 232) créant des signaux électriques à la suite de l'écoulement du fluide dans le champ magnétique, chacun des signaux étant fonction de la vitesse du courant de fluide près de chacune des électrodes ou zones d'électrode respectivement, si bien que plusieurs signaux discrets de vitesse de courant de fluide sont créés simultanément à plusieurs emplacements dans la section du conduit (4), le conduit (4) ayant une section générale circulaire et les électrodes étant régulièrement espacées le long du boîtier,

caractérisé en ce que le dispositif à aimant est un électro-aimant, et l'appareil comporte en outre un dispositif amplificateur comprenant plusieurs amplificateurs ($G_1$ à $G_9$) en nombre correspondant au nombre de paires d'électrodes, chaque électrode ou zone d'électrode de chaque paire étant connectée à une entrée de l'amplificateur correspondant et l'autre électrode ou zone d'électrode de chaque paire étant connectée à l'autre entrée de l'amplificateur correspondant, le gain de chaque amplificateur étant ajusté en fonction de la section annulaire du conduit ($A_1$ à $A_5$) correspondant aux emplacements de la paire d'électrodes ou de zones d'électrode correspondantes, les signaux de sortie des amplificateurs étant transmis à un dispositif additionneur (22) connecté aux sorties des amplificateurs et destiné à créer un signal de vitesse moyenne du courant.

9. Appareil de mesure de la vitesse moyenne d'un courant de fluide dans un conduit (4), comprenant :

(a) un boîtier (14) de forme générale tubulaire disposé transversalement à l'intérieur du conduit,

(b) un dispositif à aimant (16) placé à l'intérieur du boîtier (14) et destiné à créer, dans le fluide, un champ magnétique dont l'axe est perpendiculaire à la direction d'écoulement du fluide, et

(c) un dispositif à électrodes comprenant plusieurs électrodes (20) ou zones d'électrode (24 ; 232) placées à distance le long de la surface externe du boîtier et près de cette surface, les électrodes ou zones d'électrode (24 ; 232) étant en outre disposées en paires diamétralement opposées par rapport au boîtier (14), les droites passant par les paires étant perpendiculaires à la direction d'écoulement du fluide, les électrodes ou zones d'électrode (24 ; 232) créant des signaux électriques à la suite de l'écoulement du fluide dans le champ magnétique, chacun des signaux étant fonction de la vitesse du courant de fluide près de chacune des électrodes ou zones d'électrode respectivement, si bien que plusieurs signaux discrets de vitesse de courant de fluide sont créés simultanément à plusieurs emplacements dans la section du conduit (4), le conduit (4) ayant une section générale circulaire et les électrodes étant régulièrement espacées le long du boîtier,

caractérisé en ce que le dispositif à aimant comporte un électro-aimant, l'appareil comporte en outre un dispositif amplificateur connecté au dispositif à électrodes et destiné à créer un signal de vitesse moyenne du courant, et l'intensité du champ magnétique varie d'une valeur maximale aux extrémités du boîtier à une valeur minimale au milieu du boîtier, l'intensité du champ magnétique correspondant aux sections annulaires du conduit correspondant à l'emplacement des paires d'électrodes.

10. Appareil selon la revendication 9, dans lequel chacune des paires d'électrodes comprend une première et une seconde électrode (20a, 20b) ou zone d'électrode, les premières électrodes (20a) ou zones d'électrode étant placées d'un premier côté du boîtier (14) et étant connectées en série avec une première entrée d'amplificateur et les secondes électrodes (20b) ou zones d'électrode étant placées de l'autre côté du boîtier et étant connectées à la seconde entrée de l'amplificateur.

11. Appareil selon la revendication 9, dans lequel le dispositif amplificateur comprend plusieurs amplificateurs ($S_1$ à $S_9$) en nombre correspondant au nombre de paires de dispositifs à électrodes, une première électrode ou zone d'électrode de chaque paire étant connectée à une entrée de l'amplificateur correspondant et l'autre électrode ou zone d'électrode de chaque paire étant connectée à l'autre entrée de l'amplificateur correspondant, l'appareil comprenant en outre un dispositif additionneur (22) connecté aux sorties des amplificateurs et destiné à créer le signal de vitesse moyenne du courant.

12. Appareil selon l'une quelconque des revendications précédentes, dans lequel le dispositif à électrodes comporte une paire de tiges parallèles (26) qui sont adjacentes à la surface interne du boîtier (14) et sont parallèles à l'axe du boîtier, le boîtier contenant plusieurs ouvertures (24) adjacentes aux tiges, si bien que les parties de tiges (26) adjacentes aux ouvertures (24) délimitent les zones d'électrode.

13. Appareil selon la revendication 12, dans lequel les tiges (26) sont raccordées de façon temporaire au boîtier, si bien que les tiges peuvent être nettoyées ou remplacées lorsqu'elles sont salies ou contaminées pendant l'utilisation.

14. Appareil selon la revendication 13, dans lequel les tiges (26) sont raccordées au boitier de manière qu'elles puissent tourner si bien qu'une partie propre inutilisée des tiges peut être placée près des ouvertures du boitier lors de la rotation des tiges.

15. Appareil selon l'une quelconque des revendications 1 à 11, dans lequel le boîtier contient deux fentes verticales débouchantes à sa surface externe, et en outre dans lequel les électrodes comportent une paire de tiges isolées d'électrodes (230, 226) placées dans les fentes respectivement, les parties choisies des tiges étant dépourvues d'isolement afin qu'elles soient exposées au courant de fluide, si bien que les parties choisies (232) des tiges forment les zones d'électrode.

16. Appareil selon la revendication 15, dans lequel les tiges sont raccordées au boîtier (14) de façon amovible et de manière qu'elles puissent tourner.

17. Appareil selon la revendication 14 ou 16, comprenant en outre un dispositif (28) d'entraînement en rotation connecté aux tiges et destiné à faire tourner le tiges par rapport au boîtier.

**18.** Appareil selon l'une quelconque des revendications précédentes, dans lequel le conduit a une configuration circulaire en coupe, et dans lequel le boîtier est placé le long du diamètre du conduit.

**19.** Appareil selon l'une quelconque des revendications précédentes, dans lequel le boîtier (114) a une configuration profilée dans la direction d'écoulement du fluide.

**20.** Appareil selon l'une quelconque des revendications précédentes, comprenant en outre un dispositif (10) à soupape de montage destiné au montage du boîtier par une ouverture formée dans la paroi du conduit.

**21.** Appareil selon l'une quelconque des revendications 1 à 19, dans lequel le conduit a une configuration circulaire en coupe, et comprenant en outre un organe (30) de forme générale cylindrique constituant une manchette ayant un diamètre interne correspondant au diamètre interne du conduit, cet organe étant placé entre des segments du conduit et assurant l'écoulement du fluide entre eux, le boîtier étant raccordé audit organe.

**22.** Appareil selon la revendication 21, dans lequel le boîtier est placé le long du diamètre de l'organe en forme de manchette (30).

**23.** Appareil selon la revendication 21, dans lequel le boîtier (414) a une configuration en H.

**24.** Appareil selon la revendication 21, dans lequel le boîtier (614) a une configuration en Y.

**25.** Appareil selon la revendication 21, dans lequel le boîtier (514) a une configuration en croix.

**26.** Appareil selon la revendication 21, dans lequel le boîtier comporte une paire de boîtiers (314) placés le long de cordes parallèles de l'organe en forme de manchette.

**27.** Appareil selon l'une quelconque des revendications 2 à 26, comprenant en outre un amplificateur de décalage ayant un facteur d'échelle correspondant à la surface du conduit et destiné à transformer le signal de vitesse moyenne du courant en un signal de débit volumique.

**Patentansprüche**

**1.** Vorrichtung zum Messen der Durchschnittsgeschwindigkeit eines Fluidflusses in einer Leitung (4) mit:

(a) einer im allgemeinen röhrenförmigen Gehäusevorrichtung (14), die sich über das Innere der Leitung erstreckt;
(b) einer magnetischen Vorrichtung (16), die innerhalb der Gehäusevorrichtung (14) angeordnet ist, um in dem Fluid ein magnetisches Feld zu erzeugen, dessen Achse sich senkrecht zur Richtung des Fluidflusses erstreckt;
(c) einer Elektrodenvorrichtung mit einer Mehrzahl von Elektroden (20) oder Elektrodenflächen (24; 232) die voneinander getrennt entlang der Lange und neben der äußeren Oberfläche der Gehäusevorrichtung angeordnet sind, wobei die Elektroden oder Elektrodenflächen (24; 232) weiterhin in bezüglich der Gehäusevorrichtung (14) diametral gegenüberliegenden Paaren angeordnet sind, wobei die durch die Paare gehenden Linien senkrecht zur Richtung des Fluidflusses angeordnet sind, wobei die Elektroden oder Elektrodenflächen (24; 232) elektrische Signale in Abhängigkeit vom Fluidfluß durch das magnetische Feld erzeugen, wobei jedes der Signale eine Funktion der Geschwindigkeit des Fluidflusses neben jeder der entsprechenden Elektroden oder Elektrodenflächen ist, wodurch eine Mehrzahl von diskreten Geschwindigkeitssignalen gleichzeitig und an einer Mehrzahl von Stellen über der Fläche der Leitung (4) erzeugt wird;
dadurch gekennzeichnet, daß die Paare von Elektroden (20) oder Elektrodenflächen in jeweiligen konzentrischen, ringförmigen Abschnitten im Innern der Leitung angeordnet sind, wobei die Querschnittsfläche jeder der ringförmigen Abschnitte gleich ist, wobei die Paare der Elektroden (20) oder Elektrodenflächen ungleichmäßig entlang der Gehäusevorrichtung (14) angeordnet sind.

**2.** Vorrichtung nach Anspruch 1, die weiterhin umfaßt:

(d) eine Verarbeitungsvorrichtung, die mit der Elektrodenvorrichtung verbunden ist, um die elektrischen Signale zu verbinden, um ein mittleres Flußgeschwindigkeitsausgangssignal zu erzeugen.

**3.** Vorrichtung nach Anspruch 2, wobei die magnetische Vorrichtung (16) einen Elektromagneten umfaßt.

**4.** Vorrichtung nach Anspruch 3, wobei die Verarbeitungsvorrichtung eine Verstärkervorrichtung mit ersten und zweiten Eingängen umfaßt.

**5.** Vorrichtung nach Anspruch 4, wobei die Verstärkervorrichtung eine Mehrzahl von Verstärkern ($S_1$-$S_9$) umfaßt, die der Zahl nach der Zahl der Paare von Elektrodenvorrichtungen entsprechen, wobei eine Elektrode (20) oder Elektrodenfläche (24; 232) jedes Paares mit einem Eingang des entsprechenden Verstärkers und die andere jedes Paares mit dem anderen Eingang des entsprechenden Verstärkers verbunden ist.

**6.** Vorrichtung nach Anspruch 4, die weiterhin eine Addiervorrichtung (22) umfaßt, die mit den Ausgängen der Verstärker verbunden ist, um ein mittleres Flußgeschwindigkeitssignal zu erzeugen.

**7.** Vorrichtung nach Anspruch 4, wobei jedes der Elektrodenpaare erste und zweite Elektroden oder Elektrodenflächen umfaßt, wobei die ersten Elektroden oder Elektrodenflächen auf einer Seite der Gehäusevorrichtung angeordnet sind und in Reihe mit dem ersten Eingang der Verstärkervorrichtung angeordnet sind und wobei die zweiten Elektroden oder Elektrodenflächen auf der anderen Seite der Gehäusevorrichtung angeordnet sind und in Reihe mit dem zweiten Eingang der Verstärkervorrichtung angeordnet sind.

**8.** Vorrichtung zum Messen der Durchschnittsgeschwindigkeit eines Fluidflusses in einer Leitung (4) mit:
(a) einer im allgemeinen röhrenförmigen Gehäusevorrichtung (14), die sich über das Innere der Leitung erstreckt;
(b) einer magnetischen Vorrichtung (16), die innerhalb der Gehäusevorrichtung (14) angeordnet ist, um in dem Fluid ein magnetisches Feld zu erzeugen, dessen Achse sich senkrecht zur Richtung des Fluidflusses erstreckt;
(c) einer Elektrodenvorrichtung mit einer Mehrzahl von Elektroden (20) oder Elektrodenflächen (24; 232) die voneinander getrennt entlang der Länge und neben der äußeren Oberfläche der Gehäusevorrichtung angeordnet sind, wobei die Elektroden oder Elektrodenflächen (24; 232) weiterhin in bezüglich der Gehäusevorrichtung (14) diametral gegenüberliegenden Paaren angeordnet sind, wobei die durch die Paare gehenden Linien senkrecht zur Richtung des Fluidflusses angeordnet sind, wobei die Elektroden oder Elektrodenflächen (24; 232) elektrische Signale in Abhängigkeit vom Fluidfluß durch das magnetische Feld erzeugen, wobei jedes der Signale eine Funktion der Geschwindigkeit des Fluidflusses neben jeder der entsprechenden Elektroden oder Elektrodenflächen ist, wodurch eine Mehrzahl von diskreten Geschwindigkeitssignalen gleichzeitig und an einer Mehrzahl von Stellen über der Fläche der Leitung (4) erzeugt wird; wobei die Leitung (4) einen im allgemeinen kreisförmigen Querschnitt besitzt und wobei die Elektroden in gleichmäßigen Abständen entlang der Länge der Gehäusevorrichtung angeordnet sind;
dadurch gekennzeichnet, daß die magnetische Vorrichtung einen Elektromagneten umfaßt; und daß die Vorrichtung außerdem eine Verstärkervorrichtung mit einer Mehrzahl von verstärkungs-modifizierten Verstärkern ($G_1$-$G_9$) umfaßt, die der Zahl nach der Zahl der Paare von Elektrodenvorrichtungen entsprechen, wobei eine Elektrode oder Elektrodenfläche jedes Paares mit einem Eingang des entsprechenden Verstärkers und die andere jedes Paares mit dem anderen Eingang des entsprechenden Verstärkers verbunden ist, wobei die Verstärkung jedes Verstärkers entsprechend der ringförmigen Querschnittsfläche der Leitung ($A_1$-$A_5$) entsprechend der Anordnung des entsprechenden Paares von Elektroden oder Elektrodenflächen eingestellt wird; wobei die Ausgänge der Verstärker mit einer Addiervorrichtung (22) verbunden sind, die mit den Ausgängen der Verstärker zum Erzeugen eines mittleren Flußgeschwindigkeitssignals verbunden ist.

**9.** Vorrichtung zum Messen der Durchschnittsgeschwindigkeit eines Fluidflusses in einer Leitung (4) mit:
(a) einer im allgemeinen röhrenförmigen Gehäusevorrichtung (14), die sich über das Innere der Leitung erstreckt;
(b) einer magnetischen Vorrichtung (16), die innerhalb der Gehäusevorrichtung (14) angeordnet ist, um in dem Fluid ein magnetisches Feld zu erzeugen, dessen Achse sich senkrecht zur Richtung des Fluidflusses erstreckt;
(c) einer Elektrodenvorrichtung mit einer Mehrzahl von Elektroden (20) oder Elektrodenflächen (24; 232) die voneinander getrennt entlang der Länge und neben der äußeren Oberfläche der Gehäusevorrichtung angeordnet sind, wobei die Elektroden oder Elektrodenflächen (24; 232) weiterhin in bezuglich der Gehäusevorrichtung (14) diametral gegenüberliegenden Paaren angeordnet sind, wobei die durch die Paare gehenden Linien senkrecht zur Richtung des Fluidflusses angeordnet sind, wobei die Elektroden oder Elektrodenflächen (24; 232) elektrische Signale in Abhängigkeit vom Fluidfluß durch das magnetische Feld erzeugen, wobei jedes der Signale eine Funktion der Geschwindigkeit des Fluidflusses neben jeder der entsprechenden Elektroden oder Elektrodenflächen ist, wodurch eine Mehrzahl von diskreten Geschwindigkeitssignalen gleichzeitig und an einer Mehrzahl von Stellen über der Fläche der Leitung (4) erzeugt wird; wobei die Leitung (4) einen im allgemeinen kreisförmigen Querschnitt besitzt und wobei die Elektroden in gleichmäßigen Abständen entlang der Länge der Gehäusevorrichtung angeordnet sind; dadurch gekennzeichnet, daß die magnetische Vorrichtung einen Elektromagneten umfaßt; daß die Vorrichtung außerdem eine Verstärkervorrichtung zum Erzeugen eines mittleren Flußgeschwindigkeitssignals umfaßt; und daß die Stärke des magnetischen Feldes von einem Maximum an den Enden der Gehäusevorrichtung bis zu einem Minimum in der Mitte der Gehäusevorrichtung variiert, wobei die magnetische Feldstärke der kreisförmigen Querschnittsfläche der Leitung entsprechend der Anordnung der Elektrodenpaare entspricht.

10. Vorrichtung nach Anspruch 9, wobei jedes der Elektrodenpaare erste und zweite Elektroden (20a, 20b) oder Elektrodenflächen umfaßt, wobei die ersten Elektroden (20a) oder Elektrodenflächen auf einer Seite der Gehäusevorrichtung (14) angeordnet sind und in Reihe mit dem ersten Eingang der Verstärkervorrichtung angeordnet sind und wobei die zweiten Elektroden (20b) oder Elektrodenflächen auf der anderen Seite der Gehäusevorrichtung angeordnet sind und in Reihe mit dem zweiten Eingang der Verstärkervorrichtung angeordnet sind.

11. Vorrichtung nach Anspruch 9, wobei die Verstärkervorrichtung eine Mehrzahl von Verstärkern ($S_1$-$S_9$) umfaßt, die der Zahl nach der Zahl der Paare von Elektrodenvorrichtungen entsprechen, wobei eine Elektrode oder Elektrodenfläche jedes Paares mit einem Eingang des entsprechenden Verstärkers und die andere jedes Paares mit dem anderen Eingang des entsprechenden Verstärkers verbunden ist und weiterhin eine Addiervorrichtung (22) umfaßt, die mit den Ausgängen der Verstärker verbunden ist, um ein mittleres Flußgeschwindigkeitssignal zu erzeugen.

12. Vorrichtung nach einem der vorhergehenden Ansprüche, wobei die Elektrodenvorrichtung ein Paar von parallelen Stäben (26) neben der inneren Oberfläche der Gehäusevorrichtung (14) umfaßt, die sich parallel zur Achse der Gehäusevorrichtung erstrecken, und wobei die Gehäusevorrichtung eine Mehrzahl von Öffnungen (24) neben den Stäben umfaßt, wodurch die Bereiche der Stäbe (26) neben den Öffnungen (24) die Elektrodenflächen bilden.

13. Vorrichtung nach Anspruch 12, wobei die Stäbe (26) abnehmbar mit der Gehäusevorrichtung verbunden sind, wodurch die Stäbe gereinigt oder ausgewechselt werden können, nachdem sie durch den Betrieb verschmutzt oder verunreinigt worden sind.

14. Vorrichtung nach Anspruch 13, wobei die Stäbe (26) drehbar mit der Gehäusevorrichtung verbunden sind, wodurch ein sauberer, unbenutzter Bereich der Stäbe durch Drehung der Stäbe neben der Gehäuseöffnung angeordnet werden kann.

15. Vorrichtung nach einem der Ansprüche 1 bis 11, wobei die Gehäusevorrichtung ein Paar vertikaler Durchgangsschlitze in ihrer äußeren Oberfläche aufweist und wobei die Elektroden ein Paar isolierter Stäbe (230, 226) aufweist, die jeweils in den Schlitzen angeordnet sind, wobei ausgewählte Bereich der Stäbe frei von Isolation zum Aussetzen in den Fluidfluß sind, wodurch diese ausgewählten Bereiche (232) der Stäbe die Elektrodenflächen bilden.

16. Vorrichtung nach Anspruch 15, wobei die Stäbe abnehmbar und drehbar mit der Gehäusevorrichtung (14) verbunden sind.

17. Vorrichtung nach Anspruch 14 oder 16, die außerdem eine Drehvorrichtung (28) umfaßt, die mit den Stäben verbunden ist, um die Stäbe relativ zur Gehäusevorrichtung zu drehen.

18. Vorrichtung nach einem der vorhergehenden Ansprüche, wobei die Leitung eine kreisförmige Querschnittsanordnung besitzt und wobei außerdem die Gehäusevorrichtung entlang dem Durchmesser der Röhre angeordnet ist.

19. Vorrichtung nach einem der vorhergehenden Ansprüche, wobei die Gehäusevorrichtung (114) eine in Richtung des Fluidflusses stromlinienförmige Konfiguration besitzt.

**20.** Vorrichtung nach einem der vorhergehenden Ansprüche, die außerdem eine Montierventilvorrichtung (10) zum Montieren der Gehäusevorrichtung durch eine Öffnung in der Wand der Leitung umfaßt.

**21.** Vorrichtung nach einem der Ansprüche 1 bis 19, wobei die Leitung einen allgemein kreisförmigen Querschnitt besitzt und außerdem ein allgemein zylinderförmiges Spulenelement (30) mit einem dem inneren Durchmesser der Leitung entsprechenden Innendurchmesser aufweist, wobei das Spulenelement zwischen Abschnitten der Leitung angeordnet ist und den Fluidfluß dazwischen ermöglicht, wobei die Gehäusevorrichtung mit dem Spulenelement verbunden ist.

**22.** Vorrichtung nach Anspruch 21, wobei die Gehäusevorrichtung entlang dem Durchmesser des Spulenelements (30) angeordnet ist.

**23.** Vorrichtung nach Anspruch 21, wobei die Gehäusevorrichtung (414) eine H-förmige Anordnung besitzt.

**24.** Vorrichtung nach Anspruch 21, wobei die Gehäusevorrichtung (614) eine Y-förmige Anordnung besitzt.

**25.** Vorrichtung nach Anspruch 21, wobei die Gehäusevorrichtung (514) eine kreuzförmige Anordnung besitzt.

**26.** Vorrichtung nach Anspruch 21, wobei die Gehäusevorrichtung ein Paar von Gehäusen (314) umfaßt, die entlang paralleler Sehnen des Spulenelements angeordnet sind.

**27.** Vorrichtung nach einem der Ansprüche 2 bis 26, die außerdem eine Skalierungsverstärker umfaßt, der auf die Leitungsfläche skaliert ist, um das mittlere Flußgeschwindigkeitssignal in ein Volumenflußratensignal umzuwandeln.

FIG.1

FIG.2

EP 0 305 609 B1

FIG.3a

FIG.4a

FIG.5a

FIG.6

ROTATING
DEVICE

FLOW

FIG.3b

FIG.4b

FIG.5b

EP 0 305 609 B1

F I G. 9

F I G. 8

F I G. 7

17

FIG.10

FIG.11a

FIG.11b

FIG.11c

FIG.11d

FIG.11e

FIG.11f